# EUROPÄISCHE PATENTSCHRIFT

(11) **EP 0 918 164 B1**
(45) Veröffentlichungstag und Bekanntmachung des Hinweises auf die Patenterteilung: **09.07.2003**
(21) Anmeldenummer: 98811134.0
(22) Anmeldetag: 13.11.1998
(51) Int. Cl.: F16B 5/02

(54) **Distanzschraube**
Distance adjusting screw
Vis de réglage

(30) Priorität: 20.11.1997 CH 268897
(43) Veröffentlichungstag der Anmeldung: 26.05.1999
(73) Patentinhaber: Meyer Liestal AG, 4410 Liestal (CH)
(72) Erfinder: Hofer, David, 4448 Läufelfingen (CH)
(74) Vertreter: Eder, Carl E.

(56) Entgegenhaltungen:
- WO-A-97/26460
- FR-A- 2 713 291
- US-A- 4 900 208

## Beschreibung

Die Erfindung betrifft eine Distanzschraube gemäss dem Oberbegriff des Anspruchs 1, nämlich eine Schraube, mit welcher man ein Bauelement, wie etwa einen Balken oder ein Wandteil, in variierbarem Abstand an einem Grundelement befestigen kann.

Es gibt Distanzschrauben, welche an ihrem in das Grundelement einbringbaren vorderen Ende einen Gewindeabschnitt, am gegenüberliegenden hinteren Ende einen Verankerungsabschnitt bestehend aus mehreren sich in Richtung Schraubenkopf hin erweiternden, ringförmigen Rippen, und dazwischen einen gewindelosen Schaftabschnitt besitzen. Solche Schrauben sind etwa aus der US-A 4,808,051 bekannt und weisen den Nachteil auf, dass sie nur begrenzt einsetzbar sind. So muss in diesem besonderen Fall die beim Einschrauben des Gewindeabschnittes in das Grundelement aufzubringende Kraft so gross sein, dass gleichzeitig der Verankerungsabschnitt in das Bauelement eingetrieben wird, was nicht nur eine unerwünschte Riss- und Spaltbildung zur Folge haben kann sondern zudem auch die Verwendung von Bauelementen voraussetzt, welche eine geringere Festigkeit als das Grundelement besitzen.

Zur Überwindung dieser Nachteile sind in der Zwischenzeit noch weitere Distanzschrauben bekannt geworden.

So ist eine zweite Distanzschraube aus der internationalen Offenlegungsschrift 97/26460 bekannt. Die in dieser Vorveröffentlichung offenbarte Schraube besitzt hierbei einen in das Grundelement einschraubbaren Gewindeabschnitt, dem gegenüberliegend einen Kopfabschnitt mit mehreren dem stirnseitigen hinteren Ende zugewandten Umfangsrippen und einem daran anschliessenden Gewinde, sowie einen Schaftbereich, der seinerseits zwischen dem in das Grundelement einschraubbaren Gewindeabschnitt und dem Gewinde des Kopfabschnittes angeordnet ist. Ein wesentliches Merkmal dieser Schraube besteht darin, dass der Kopfabschnitt einen grösseren Kerndurchmesser besitzt als der in das Grundelement einschraubbare vordere Gewindeabschnitt.

In den Umfangsrippen und in den Gewindegängen des Kopfabschnittes sind ferner dreieckförmige Kerben vorgesehen. Diese bilden Schneidekanten, die einerseits das Eindrehen des dazugehörigen Gewindes in das Bauelement und erleichtern und andererseits verhindern, dass der Verankerungsabschnitt bei der Abstandskorrektur aus dem Bauelement heraustritt.

Diese Schraube weist gegenüber der vorstehend beschriebenen Distanzschraube zwar einige Vorteile auf, ist jedoch aufgrund Ihrer Ausgestaltung mit zwei unterschiedlichen Kerndurchmessern kostspielig in der Herstellung und daher für einen effizienten Baustellen-Einsatz kaum geeignet.

Eine dritte Distanzschraube ist schliesslich aus der europäischen Patent schrift EP-A-0'801'233 bekannt. Die darin offenbarte Senkkopfschraube ist im wesentlichen gleich ausgebildet, wie die aus der WO/97/26460 bekannte Schraube, besitzt also einen in das Grundelement einschraubbaren Gewindeabschnitt, einen Kopfabschnitt mit mindestens zwei Umfangsrippen und einem daran anschliessenden Gewinde, sowie einen dazwischen angeordneten Schaftbereich.

Wesentliches Merkmal dieser dritten Distanzschraube besteht darin, dass das Gewinde des Kopfabschnittes einen grösseren Aussendurchmesser besitzt als der Gewindeabschnitt im Spitzenbereich.

Es ist bekannt, dass sich sowohl die Schraube der WO/97/26460 als auch diejenige der EP-A 0'801'233 nicht immer mühelos, das heisst mit möglichst geringem Kraftaufwand, in das zu befestigende Bauelement eintreiben lassen. Darüber hinaus weisen diese beide Distanzschrauben auch noch den weiteren Nachteil auf, dass bei ihrer Verwendung die Einstellung eines gewünschten Abstandes zwischen Grundelement und Bauelement nur dann möglich ist, wenn das Gewinde des Kopfabschnittes praktisch vollständig aus dem Bauelement herausgedreht ist und dass daher bei Bauelementen mit verhältnismässig grossen Wandstärken der Schraubenkopf weit in das Bauelement eingedreht werden muss, was sich ungünstig auf die Stabilitätseigenschaften der befestigten Elemente auswirkt.

Der Erfindung liegt nun ausgehend von dem aus der WO/97/26460 und dem aus der EP-A 0'801'233 bekannten Stand der Technik die Aufgabe zugrunde, eine Distanzschraube zu schaffen, die die vorgenannten Nachteile nicht aufweist, gleichwohl aber eine optimale Einstellung eines gewünschten Abstandes zwischen Bauelement und Grundelement ermöglicht.

Diese Aufgabe wird durch eine Distanzschraube mit den Merkmalen des Patentanspruchs 1 gelöst.

Vorteilhafte Ausführungsformen der erfindungsgemässen Distanzschraube gehen aus den abhängigen Ansprüchen hervor.

Es sei an dieser Stelle noch erwähnt, dass aus der französischen Patent schrift FR-A-2'713'291 und der US-Patentschrift 4'900'208 Befestigungsmittel bekannt sind, welche das im kennzeichnenden Teil des Anspruchs 1 angegebene Merkmal, dass das Gewinde des Verankerungsabschnittes mit mehreren schlitzförmigen Ausnehmungen versehen ist, aufweisen. Diese Befestigungsmittel sind aber keine Distanzschrauben der hier beschriebenen Art, sondern dienen vielmehr dazu, Isolationsplatten und dergleichen direkt auf einem Träger, wie zum Beispiel auf einer Dachplatte, zu befestigen. Den Befestigungsmitteln der FR-A 2'713'291 und US-A 4'900'208 liegt darüber hinaus eine andere technische Aufgabe zugrunde. Sie nehmen daher die Distanzschraube, die Gegenstand der hier vorliegenden Erfindung ist, weder vorweg noch legen sie sie nahe.

Die Erfindung wird nachfolgend anhand der Zeichnung näher beschrieben. In der Zeichnung zeigt
die Figur 1 eine Ansicht einer bevorzugten Ausführungsform der erfindungsgemässen Distanzschraube,
die Figur 2 die Rückseite der in der Figur 1 gezeichneten Distanzschraube, und
die Figur 3 die Verwendung der in den Figuren 1 und 2 gezeichneten Distanzschraube zur Befestigung einer Holzlatte an einem ebenfalls aus Holz bestehenden Grundelement.

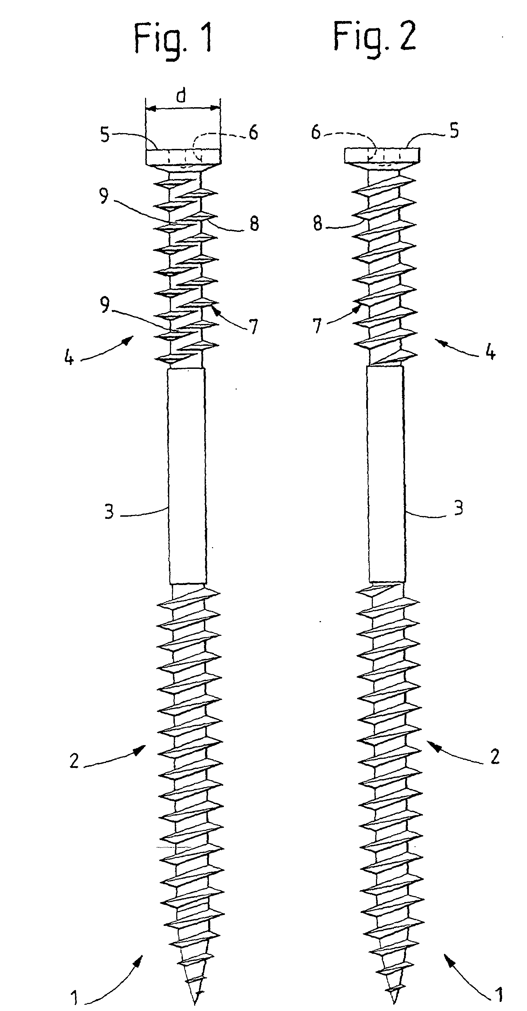

Die in den Figuren 1 und 2 gezeichnete und als ganzes mit 1 bezeichnete Distanzschraube besitzt einen Spitzenbereich mit einem Gewindeabschnitt 2, einen Schaftabschnitt 3, der sich an den Gewindeabschnitt 2 anschliesst und einen Kopfabschnitt 4. Letzterer ist stirnseitig mit einem Schraubenkopf 5 versehen, welcher seinerseits eine Ausnehmung 6 zum Einstecken eines Werkzeuges aufweist.

Der Kopfabschnitt 4 besitzt desweitern einen Verankerungsabschnitt 7. Dieser ist zum Einsetzen in das am Grundelement zu befestigende Bauelement bestimmt und wird im wesentlichen durch ein Gewinde 8 gebildet, das nicht nur den gleichen Kern- und Aussendurchmesser sondern auch die gleiche Steigung aufweist wie der in das Grundelement einschraubbare Gewindeabschnitt 2.

Erfindungsgemäss besitzt das Gewinde 8 einen äusseren Gewindedurchmesser, der höchstens gleich gross ist wie der äusserste Durchmesser d des Schraubenkopfes 5, sowie eine entlang der Schraubenachse angeordnete Schlitzreihe, welche von quer zur Schraubenachse verlaufenden und den Gewindegang in konstanten Abständen unterbrechenden, schlitzartigen Ausnehmungen 9 gebildet wird. Letztere lassen sich zum Beispiel durch Fräsen oder Walzen herstellen und dienen insbesondere dazu, beim Einschrauben des Gewindeteiles 2 in das Grundelement eine derartige Relativbewegung des Verankerungsabschnittes 7 zum Bauelement zu ermöglichen, dass sich der Abstand zwischen Bauelement und Grundelement beim Einschrauben verringern und in analoger Weise beim Ausschrauben erhöhen lässt. Wie im gezeichneten Ausführungsbeispiel dargestellt, werden die Ausnehmungen 9 paarweise durch je zwei zur Schraubenachse senkrecht angeordnete Gewinde-Schnittflächen begrenzt. Im Rahmen der Erfindung können diese Schnittflächen jedoch auch einzeln oder paarweise schräg, d.h. in einem zum Gewindeabschnitt 2 spitzen oder stumpfen Winkel verlaufen, was gegebenenfalls verbesserte Verankerungseigenschaften zur Folge haben kann.

Zur Befestigung einer Holzlatte 10 an einer ebenfalls aus Holz bestehenden Wand 11 wird die erfindungsgemässe Schraube zuerst mit ihrem vorderen Gewindeabschnitt 2 durch die Holzlatte 10 hindurchgeschraubt. Anschliessend erfolgt dessen Befestigung an der Holzwand 11. Dabei wird auch das erfindungsgemässe Gewinde 8 in die Holzlatte 11 eingedreht, was im Gegensatz zur Verwendung von bereits bekannten Schrauben ohne übermässigen Kraftaufwand erfolgt.

Der Eindrehvorgang des Gewindes 8 in die Holzlatte 10 ist verschieden vom Einschraubvorgang des Gewindeabschnittes 2 in die Holzwand 11. Beim Einschrauben des Gewindeabschnittes 2 in die Holzwand 11 bzw. beim Eindrehen des Gewindes 8 in die Holzlatte 10 erzeugen nämlich die schlitzartigen Ausnehmungen 9 einen Einzugswiderstand, um dessen Betrag die Durchziehkraft des Gewindes 8 durch die Holzlatte 10 verringert wird. Dadurch und dadurch, dass der Schraubenkopf 5 einen Durchmesser d aufweist, der mindestens gleich gross ist wie der äussere Durchmesser des Gewindes 8, vorzugsweise aber grösser ist als dieser, kommt es, wenn der Schraubenkopf 5 vollständig in der Holzlatte 10 versenkt ist, dazu, dass sich der Abstand zwischen Holzlatte 10 und Holzwand 11 beim Einschrauben verringern und in analoger Weise beim Ausschrauben erhöhen lässt.

Ein weiterer wesentlicher Vorteil der erfindungsgemässen Distanzschraube gegenüber dem aus der WO/97/26460 und dem aus der EP-A 0'801'233 bekannten Stand der Technik besteht darin, dass der Schraubenkopf 5 beim Eindrehen der Distanzschraube 1 nur soweit in die Holzlatte 10 eindringt, bis er mit seinem grössten Umfang in diesem Element zu stecken kommt, also beim weiteren Einschrauben des Gewindeabschnittes 2 in die Holzwand 11 nicht durch die Latte 10 hindurchgezogen wird, was schliesslich eine verbesserte Querstabilität der befestigten Holzlatte 10 zur Folge hat.

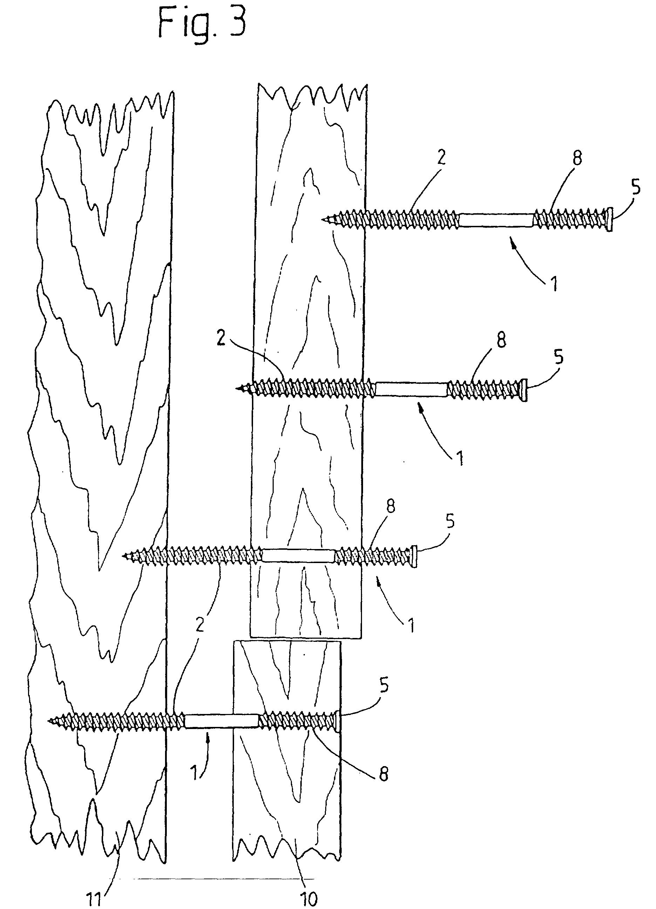

Es sei an dieser Stelle noch darauf hingewiesen, dass die anhand der Figuren 1 bis 3 beschriebene Distanzschraube nur eine Auswahl von mehreren möglichen Ausführungsformen der Erfindung darstellt und in verschiedener Hinsicht geändert werden kann.

So können die Längenverhältnisse von Gewindeabschnitt 2, Schaft 3 und Gewinde 8 verschiedenartig gewählt sein, wobei es selbstverständlich auch möglich ist, schaftfreie Distanzschrauben vorzusehen.

In Anlehnung an die WO97/26460 und EP-A 0'801'233 besteht ferner die Möglichkeit, den Gewindeabschnitt 2 und den Verankerungsabschnitt 7 mit unterschiedlichen Aussen- und/oder Kerndurchmessern und/oder mit unterschiedlichen Gewindesteigungen zu versehen.

Abhängig von der Materialbeschaffenheit des Bauelementes können schliesslich verschiedene erfindungsgemässe Distanzschrauben vorgesehen werden, deren Ausnehmungen in Anzahl, Form, Grösse und Ausrichtung variieren. So können die Ausnehmungen zum Beispiel auch in unterschiedlichen Abständen und/oder versetzt zueinander, so etwa schraubenlinienförmig über dem Gewindegang des Verankerungsabschnittes angeordnet sein, oder sie können sich in ihren Tiefen- und/oder Breiten-Verhältnissen von den Ausnehmungen 9 des gezeichneten Ausführungsbeispieles unterscheiden. Ferner kann auch das in das Grundelement einzutreibende Gewinde unterschiedlich ausgebildet sein und zum Beispiel ein zum Einschrauben in ein Mauerwerk dienenden Gewindekopf besitzen, so dass Holzlatten und dergleichen auch an einer Betonmauer befestigt werden können. Der in das Grundelement einschraubbare Gewindeabschnitt kann aber auch mit einem sägezahnförmigen Gewindegang versehen sein, so dass die erfindungsgemässen Distanzschrauben ohne Vorbohrung in eine Holzwand eingeschraubt werden können.

## Patentansprüche

1. Distanzschraube aufweisend einen in ein Grundelement (11) einschraubbaren Gewindeabschnitt (2) und einen in ein Bauelement (10) einbringbaren Kopfabschnitt (4) mit einem stirnseitigen Schraubenkopf (5) und einem ein Gewinde (8) aufweisenden Verankerungsabschnitt (7), **dadurch gekennzeichnet, dass** der Verankerungsabschnitt (7) keine die Verankerung des Kopfabschnittes (4) im Bauelement ermöglichenden Umfangsrippen besitzt und nur aus dem genannten Gewinde (8) besteht, dass dieses Gewinde (8) mit mehreren den Gewindegang unterbrechenden, schlitzförmigen Ausnehmungen (9) versehen ist, und dass der äussere Durchmesser des Schraubenkopfes (5) mindestens gleich gross ist wie der äussere Durchmesser des Gewindes (8).

2. Distanzschraube nach Anspruch 1, **dadurch gekennzeichnet, dass** die Ausnehmungen des Gewindes in unterschiedlichen Abständen oder versetzt zueinander angeordnet sind.

3. Distanzschraube nach Anspruch 1, **dadurch gekennzeichnet, dass** die Ausnehmungen des Gewindes quer oder schräg zur Schraubenachse angeordnet sind.

4. Distanzschraube nach Anspruch 1, **dadurch gekennzeichnet, dass** das Gewinde (8) eine entlang der Schraubenachse angeordnete Schlitzreihe besitzt, welche ihrerseits aus quer zur Schraubenachse verlaufenden und den Gewindegang in konstanten Abständen unterbrechenden Ausnehmungen (9) gebildet wird.

5. Distanzschraube nach einem der Ansprüche 1 bis 4, **dadurch gekennzeichnet, dass** der äussere Durchmesser des Schraubenkopfes (5) grösser ist als der äussere Durchmesser des Gewindes (8).

6. Distanzschraube nach einem der Ansprüche 1 bis 5, **dadurch gekennzeichnet, dass** der Gewindeabschnitt (2) und der Verankerungsabschnitt (7) den gleichen Aussendurchmesser besitzen.

7. Distanzschraube nach einem der Ansprüche 1 bis 6, **dadurch gekennzeichnet, dass** der Gewindeabschnitt (2) und der Verankerungsabschnitt (7) den gleichen Kerndurchmesser besitzen.

8. Distanzschraube nach einem der Ansprüche 1 bis 7, **dadurch gekennzeichnet, dass** zwischen dem Gewindeabschnitt (2) und dem Verankerungsabschnitt (7) ein gewindeloser Schaftabschnitt (3) vorgesehen ist.

9. Distanzschraube nach einem der Ansprüche 1 bis 8, **dadurch gekennzeichnet, dass** der Gewindeabschnitt (2) und das Gewinde (8) des Verankerungsabschnittes (7) die gleiche Gewindesteigung besitzen.

10. Distanzschraube nach einem der Ansprüche 1 bis 8, **dadurch gekennzeichnet, dass** der Gewindeabschnitt (2) und das Gewinde (8) des Verankerungsabschnittes (7) unterschiedliche Gewindesteigungen besitzen.

## Claims

1. A spacer screw having a thread section (2) which can be screwed into a base member (2) and a head section (4) which can be introduced into a structural member (10) and has a screw head (4) at the end and an anchoring section (7) having a thread (8), **characterised in that** the anchoring section (7) has no circumferential ribs permitting anchoring of the head section (4) in the structural member (10) and consists only of said thread (8), that this thread (8) is provided with a plurality of slit-like recesses (9) interrupting the thread turn, and that the external diameter of the screw head (5) is at least equal to the external diameter of the thread (8).

2. The spacer screw as claimed in claim 1, **characterised in that** the recesses of the thread are arranged different distances apart or staggered relative to one another.

3. The spacer screw as claimed in claim 1, **characterised in that** the recesses of the thread are arranged transversely or obliquely with respect to the screw axis.

4. The spacer screw as claimed in claim 1, **characterised in that** the thread (8) has a series of slits which is arranged along the screw axis and which in turn is formed from recesses (9) running transversely to the screw axis and interrupting the thread turn at constant distances.

5. The spacer screw as claimed in one of the claims 1 to 4, **characterised in that** the external diameter of the screw head (5) is greater than the external diameter of the thread (8).

6. The spacer screw as claimed in one of the claims 1 to 5, **characterised in that** the thread section (2) and the anchoring section (7) have the same external diameter.

7. The spacer screw as claimed in one of the claims 1 to 6, **characterised in that** the thread section (2) and the anchoring section (7) have the same core diameter.

8. The spacer screw as claimed in one of the claims 1 to 7, **characterised in that** a threadless shank section (3) is provided between the thread section (2) and the anchoring section (7).

9. The spacer screw as claimed in one of the claims 1 to 8, **characterised in that** the thread section (2) and the thread (8) of the anchoring section (7) have the same thread pitch.

10. The spacer screw as claimed in one of the claims 1 to 9, **characterised in that** the thread section (2) and the thread (8) of the anchoring section (7) have different thread pitches.

## Revendications

1. Vis d'écartement possédant une section filetée (2) pouvant être vissée dans un élément de base (11), ainsi qu'une section de tête (4) pouvant être introduite dans un élément de construction (10) , avec une tête de vis (5) à l'extrémité avant et une section d'ancrage (7) avec filetage (8), **caractérisée par le fait que** la section d'ancrage (7) ne possède pas de nervure circonférentielle permettant l'ancrage de la section de tête (4) dans l'élément de construction, étant exclusivement formée du filetage (8), ce dernier étant doté de plusieurs entailles (9) en forme d'encoche interrompant ce filetage (8), et **par le fait que** le diamètre extérieur de la tête de vis (5) est au minimum aussi grand que le diamètre extérieur du filetage (8).

2. Vis d'écartement selon revendication 1, **caractérisée par le fait que** les entailles du filetage sont disposées à différents intervalles ou déportées les unes par rapport aux autres.

3. Vis d'écartement selon revendication 1, **caractérisée par le fait que** les entailles du filetage sont disposées transversalement ou obliquement par rapport à l'axe de la vis.

4. Vis d'écartement selon revendication 1, **caractérisée par le fait que** le filetage (8) possède une série d'encoches disposées le long de l'axe de la vis, formées d'entailles (9) perpendiculaires à l'axe de la vus et interrompant le filetage à intervalles réguliers.

5. Vis d'écartement selon revendications 1 à 4, **caractérisée par le fait que** le diamètre extérieur de la tête de vis (5) est plus grand que le diamètre extérieur du filetage (8).

6. Vis d'écartement selon revendications 1 à 5, **caractérisée par le fait que** la section filetée (2) et la section d'ancrage (7) possèdent le même diamètre extérieur.

7. Vis d'écartement selon revendications 1 à 6, **caractérisée par le fait que** la section filetée (2) et la section d'ancrage (7) possèdent le même diamètre de noyau.

8. Vis d'écartement selon revendications 1 à 7, **caractérisée par le fait que** la section filetée (2) est séparée de la section d'encrage (7) par une section cylindrique non filetée (3).

9. Vis d'écartement selon revendications 1 à 8, **caractérisée par le fait que** la section filetée (2) et le filetage (8) de la section d'ancrage (7) possèdent le même pas.

10. Vis d'écartement selon revendications 1 à 8, **caractérisée par le fait que** la section filetée (2) et le filetage (8) de la section d'ancrage (7) possèdent des pas différents.
